# EUROPÄISCHE PATENTSCHRIFT

(11) **EP 1 747 483 B1**
(45) Veröffentlichungstag und Bekanntmachung des Hinweises auf die Patenterteilung: **30.06.2010**
(21) Anmeldenummer: 05729610.5
(22) Anmeldetag: 21.03.2005
(51) Int. Cl.: G01V 3/15, G01V 3/08

(54) **ORTUNGSGERÄT SOWIE VERFAHREN ZUR KALIBRIERUNG EINES ORTUNGSGERÄTS**
TRACKING DEVICE AND METHOD FOR CALIBRATING A TRACKING DEVICE
APPAREIL DE REPERAGE ET PROCEDE POUR CALIBRER UN APPAREIL DE REPERAGE

(30) Priorität: 12.05.2004 DE 102004023330
(43) Veröffentlichungstag der Anmeldung: 31.01.2007
(73) Patentinhaber: ROBERT BOSCH GMBH, 70442 Stuttgart (DE)
(72) Erfinder: SKULTETY-BETZ, Uwe, 70771 Leinfelden-Echterdingen (DE); HAASE, Bjoern, 70182 Stuttgart (DE); MAHLER, Michael, 70771 Leinfelden-Echterdingen (DE); HOFFMANN, Ulli, 75223 Nieffern-Oeschelbronn (DE); KRAPF, Reiner, 72770 Reutlingen (DE); WIELAND, Christoph, 71083 Herrenberg-Kuppingen (DE)
(86) Internationale Anmeldenummer: PCT/EP2005/051291
(87) Internationale Veröffentlichungsnummer: WO 2005/111663

(56) Entgegenhaltungen:
- EP-A- 1 341 005
- DE-A1- 10 207 477
- US-A- 4 887 066
- US-A- 5 337 002

## Beschreibung

Die Erfindung betrifft ein Ortungsgerät, insbesondere ein handgehaltenes Ortungsgerät, zur Detektion von in einem Medium eingeschlossenen Objekten nach dem Oberbegriff des Anspruchs 1. Des weiteren betrifft die Erfindung ein Verfahren zur Kalibrierung eines Messgeräts, insbesondere zur Kalibrierung eines handgehaltenen Messgeräts zur Detektion von in einem Medium eingeschlossenen Objekten.

### Stand der Technik

Ortungsgeräte zur Detektion von in einem Medium eingeschlossenen Objekten werden vielfach im Bereich des Handwerks und des Innenausbaus, beispielsweise zur Lokalisierung von elektrischen Leitungen oder Wasserleitungen genutzt. Neben der konkreten Realisierung der eigentlichen Messfunktion ist die Bedienung des Gerätes von entscheidender Bedeutung für die Qualität der Messergebnisse. Ein von der Technologie her hochwertiges Messgerät kann in der Praxis im Feld nur eine geringe Messleistung erreichen, wenn der Benutzer es falsch bedient, bzw. bei der Bedienung des Gerätes von falschen Annahmen ausgeht

Bei Ortungsgeräten, welche typischer Weise zur Suche von Leitungen, Rohren, Metallständern oder Holzbalken in Wänden, Decken und Böden eingesetzt werden, lassen sich verschiedene Gerätetypen an Hand der verwendeten Deteklionsrnethode unterscheiden.

So sind beispielsweise induktive Geräte bekannt, die ein Magnetfeld erzeugen, welches durch eingeschlossene, metallische Gegenstände gestört wird. Das derart geänderte Magnetfeld wird durch einen Detektor, der eine oder mehrere Spulen aufweist, gemessen, so dass die Lage des eingeschlossenen, metallischen Gegenstands durch das Verschieben oder Verfahren des Ortungsgeräts über die Oberfläche des den Gegenstand einschließenden Mediums lokalisiert werden kann. Nachteilig bei Detektoren dieser Art ist, dass lediglich Metalle detektiert werden können.

Eine zweite Klasse von Ortungsgeräten, welche sich als kapazitive Geräte beschreiben lassen, bauen aktiv über einen im Messgerät vorhandenen Messkondensator ein elektrisches Feld auf, das durch Objekte, die in dem Medium, beispielsweise einer Wand, einer Decke oder einem Boden eingeschlossen sind, gestört wird. Ein solches Feld dringt jedoch nicht sehr weit in das zu untersuchende Medium ein. Daher werden diese Geräte vor allem als "studfinder" verwendet, da sie insbesondere Holzbalken lokalisieren können, die hinter Wandverkleidungen, wie beispielsweise Gipskartonplatten oder Holzverkleidungen verborgen sind.

Des weiteren bekannt sind Netzspannungsdetektoren, die kapazitiv, jedoch passiv, d. h. ohne Erzeugung eines eigenen elektrischen Feldes das Wechselspannungsfeld einer Netzspannungsleitung erfassen und somit Lage und Verlauf von aktiven elektrischen Leitungen in Wänden aufzeigen können.

Aus jüngster Zeit sind Hochfrequenzdetektoren bekannt, die über einen Messkondensator ein elektromagnetisches Hochfrequenzfeld erzeugen, welches tief in ein zu untersuchendes Medium eindringen kann. Beim Überfahren der Oberfläche des zu untersuchenden Mediums werden innenliegende Materialänderungen, wie sie beispielsweise durch einen eingeschlossenen Gegenstand verursacht werden, durch eine Änderung der Dielektrizitätskonstanten des Messkondensators erfasst und lokalisiert. Bei Messgeräten dieser Art ist es unerheblich, ob die Objekte aus Metall, Kunststoff, Gasen oder Flüssigkeiten bestehen bzw. diese beinhalten. Es reicht aus, dass sich die elektrischen Eigenschaften des eingeschlossenen Objektes von denen des umgebenden Mediums, wie beispielsweise eines Wandmaterials, unterscheiden.

Ebenfalls bekannt sind Radargeräte, die Radarimpulse aussenden, welche von in einem Medium verborgenen Objekten zurückgeworfen werden. Durch Auswertung der reflektierten Radarimpulse sind Aussagen über die in dem Medium eingeschlossenen Objekte möglich.

Den meisten dieser Geräteklassen gemein ist, dass diese zur Erzielung eines sinnvollen Messergebnisses, insbesondere beim Einschalten und/oder in regelmäßigen Abständen kalibriert werden müssen. Bei dieser Kalibration wird zumeist ein interner elektronischer Abgleich durchgeführt, der in einer Situation erfolgen sollte, in der sich kein zu suchendes Objekt in der Nähe des Sensors befindet.

So müssen beispielsweise Metallortungsgeräte in großem Abstand zu jedem sich in der Nähe befindlichen Metall kalibriert werden. Dazu hält man das Gerät typischerweise von der zu untersuchenden Wandung weg, in die Luft. Nach erfolgter Kalibrierung kann man das Gerät auf das zu untersuchende Medium, wie beispielsweise eine Wand, einen Boden oder eine Decke aufsetzen, um verborgene Objekte zu lokalisieren. Abgesehen davon, dass ein solcher Kahbrierungsvorgang zeitaufwendig ist, ergibt sich durch den Kalibrierungsvorgang selbst ein gewisses Risiko, da im Falle einer falsch durchgeführten Kalibrierung auch falsch positive bzw. falsch negative Messergebnisse auftreten können. Sach- oder gar Personenschäden können im schlimmsten Fall die Folge einer solchen Falschkalibration sein.

Anderseits sind viele kapazitive Ortungsgeräte bei direktem Wandkontakt des Messgerätes durch eine Referenzmessung zu kalibrieren.

Ortungsgeräte sind aus den Dokumenten EP 1 341 005 A2 und US-A-5,337,002 bekannt.

### Vorteile der Erfindung

Die Erfindung betrifft ein Ortungsgerät gemäß Anspruch 1.

Das erfindungsgemäße Ortungsgerät zur Detektion von in einem Medium eingeschlossenen Objekten weist zum einen Mittel zur Detektion der im Medium eingeschlossenen Objekte auf. Neben diesen Detektionsmitteln besitzt das Ortungsgerät Mittel, die es ermöglichen, einen vorgebbaren Abstand des Ortungsgeräts zu einer Oberfläche eines Mediums zu messen und somit sicher zu stellen, dass das Gerät entweder einen notwendigen Mindestabstand zu dem Mediums einhält oder aber eindeutig auf die Oberfläche des Mediums aufgesetzt ist. Mit Hilfe dieser zweiten Mittel, die eine Abstandssensorik für das Messgerät bilden, kann somit sichergestellt werden, dass das erfindungsgemäße Ortungsgerät derart angeordnet ist, dass eine Referenzmessung zur Kalibrierung des Messgeräts durchgeführt werden kann. Solche Referenzmessungen werden beispielsweise bei induktiven Ortungssensoren in Luft durchgeführt, wobei sichergestellt sein muss, dass kein Objekt hinreichend nah zu der Detektionseinheit zur Lokalisierung der eingeschlossenen Objekte vorhanden ist. Ein solcher Gegenstand würde die zur Kalibrierung durchgeführt Referenz- oder Nullmessung verfälschen und somit zu einem falschen Nullabgleich des Messgeräts führen. Insbesondere ermöglicht das erfindungsgemäße Ortungsgerät mittels einer Wandabstandssensorik in diesem Fall die Sicherstellung eines für eine Referenzmessung erforderlichen Mindestabstandes.

Andererseits gibt es Messgeräte, wie die sogenannten kapazitiv arbeitenden "Studfinder" oder Balkendetektoren, die kalibriert werden, indem sie auf eine zu untersuchende Wand, an einer Stelle, an der sich jedoch kein Balken befindet, aufgesetzt werden müssen. Das so gemessene reine Wandsignal entspricht dann dem Referenz- oder Kalibrationssignal. In diesem Fall ist das Gerät auf die Wand aufzusetzen, um den Wandkontakt sicher zu stellen. Bei dieser Art von Messgeräten ist der dem Gerät vorgebbare Abstand zu einer Oberfläche eines Mediums somit dann gleich Null. Dieser Spezialfall, des verschwindenden Abstands des Messgerätes von der Wand, kann in bestimmten Anwendungsfällen von Messgeräten, die in der Luft kalibriert werden müssen, bereits ausreichend sein, um dem Messgerät und dem Nutzer zu signalisieren, dass unter diesen Bedingungen eine Kalibrationsmessung für dieses spezielle Messgerät nicht sinnvoll, da fehleranfällig ist.

Durch die in den abhängigen Ansprüche aufgeführten Merkmale sind vorteilhafte Weiterbildungen des erfindungsgemäßen Ortungsgeräts gemäß Anspruch 1 möglich.

In einer vorteilhaften Ausfüuhrungsform des erfindungsgemäßen Ortungsgeräts weisen die zweiten Detektionsmittel, welche für die Abstandssensorik sorgen, einen kapazitiven Sensor auf. Ein Sensor nach kapazitiver Bauart baut ein elektrisches oder elektromagnetisches Feld zwischen seinen Elektroden auf. Ändert sich in diesem Feld das umgebende Medium, beispielsweise dadurch, dass das anfangs in die Luft gerichtete Messgerät sich der Wand annähert, so resultiert aufgrund der unterschiedlichen Dielektrizitätskonstanten des in dem Messbereich des Messkondensators eingebrachten Mediums, das elektrisches bzw. elektromagnetische Feld des Kondensators. Eine solche Feldänderung ist messbar.
In einer besonders vorteilhaften Ausführungsform eines erfindungsgemäßen Ortungsgerätes kann der Messkondensator, der Bestandteil der ersten Mittel zur Detektion von in einem Medium eingeschlossenen Objekten ist, gleichzeitig auch als Abstandssensorik genutzt werden und somit auch die zweiten Detektionsmittel bilden. Durch eine entsprechende Beschaltung des Messkondensators zur Ortung kann somit mit gleichen Bauteilen auch die Abstandssensorik realisiert werden. Dies ermöglicht in vorteilhafter Weise eine kompakte Bauweise des erfindungsgemäßen Ortungsgeräts. In dieser Ausfiihrungsform werden die ersten und die zweiten Mittel durch dasselbe Bauteil realisiert.

In einer alternativen Ausführungsform des erfindungsgemäßen Ortungsgeräts können die zweiten Detektionsmittel, welche eine Abstandssensorik bilden, einen optischen Sensor zur Festlegung des Mindestabstands des erfindungsgemäßen Messgeräts zur Oberfläche eines zu untersuchenden Mediums aufweisen. Hierbei können alle Arten von optischen Detektoren als Sensor fungieren. So kann beispielsweise, wie aus der Triangulationsmethode bekannt, ein fokussierter Lichtstrahl, beispielsweise eines Lasers die Oberfläche eines zu untersuchenden Mediums schräg beleuchten. Ein lichtempfindlicher Empfänger, wie beispielsweise eine CCD-Anordnung, detektiert dabei in definiertem Winkel, die von der Wand reflektierte Strahlungsintensität. Dieser Winkel kann derart eingestellt sein, dass ausgesendetes Licht nur bei Wandkontakt des Messgeräts auf den Empfänger zurückfällt. In diesem Fall könnte mit der erfindungsgemäßen Abstandssensorik ein direkter Wandkontakt nachgewiesen werden. Alternative Ausführungsformen können vorsehen, dass von der Wand zurückreflektiertes Licht nur bei einem bestimmten Mindestabstand empfangen werden, so dass aufgrund eines solchen Signals, das Vorliegen eines Mindestabstands von der zu untersuchenden Wand bestätigt werden kann. Ebenfalls möglich ist eine solche Abstandsmessung unter Verwendung mindestens eines Ultraschallsignals.

Prinzipiell lässt sich die Abstandssensorik des erfindungsgemäßen Ortungsgeräts auch durch mechanische Verfahren realisieren. Dabei sind alle Arten von mechanischer Kontaktdetektion durch Schaltelemente möglich. Durch das Aufsetzen des Gerätes auf die Wand bzw. durch das Überschreiten eines Mindestabstands des Gerätes von der Wand wird dabei ein Schaltelement automatisch betätigt und somit das Unterschreiten eines Mindestabstands an die Steuer- und Auswerteeinheit des Messgeräts übermittelt.

Allen diesen Ausführungsformen des erfindungsgemäßen Messgeräts ist gemein, dass die Signale der Wandabstandssensoren auf elektronischem oder softwaretechnischem Wege vom Ortungsgerät selbst ausgewertet werden. Aufgrund dieser Zusatzinformation kann sodann eine Entscheidung getroffen werden, ob eine Kalibrierungsmessung durchgeführt werden darf oder nicht. Diese Entscheidung kann beispielsweise automatisch in der Steuer- oder Auswerteeinheit des Messgeräts vorgenommen werden. So kann beispielsweise auch der Nutzer des erfindungsgemäßen Ortungsgeräts über eine erfolgreiche bzw. misslungene Kalibrierung per Anzeige oder Tonsignal informiert werden. Ebenso kann im erfindungsgemäßen Ortungsgerät eine Automatik integriert sein, die das Gerät bei Vorliegen eines hinreichenden Wandabstands automatisch kalbriert. Bei einer solchen Ausführungsform ergibt sich zudem der Vorteil, dass das Messgerät unmittelbar nach Einschalten bereits funktionsfähig ist, da unabhängig vom Nutzer der Kalibrierungsvorgang, bereits durchgeführt worden ist.

Die Erfindung betrifft ferner ein Verfahren gemäß Anspruch 7.

Das ebenfalls beanspruchte erfindungsgemäße Verfahren zur Kalibrierung eines Messgeräts, insbesondere zur Kalibrierung eines handgehaltenen Ortungsgeräts zur Detektion von in einem Medium eingeschlossenen Objekten hat den Vorteil, dass die zur Kalibrierung notwendige Referenzmessung des Messgeräts erst nach der Durchführung mindestens einer Messung eines Abstandes des Messgeräts zu einem Medium durchgeführt wird. Auf diese Weise ist mit dem erfindungsgemäßen Verfahren sichergestellt, dass eine richtige Referenzmessung zur Kalibrierung durchgeführt wird. Insbesondere wird eine solche Referenzmessung zur Kalibrierung bei bestimmten Messgeräten nicht durchgeführt, wenn ein vorgebbarer Mindestabstand des Messgeräts zur Oberfläche eines Mediums unterschritten ist. Das Vorliegen eines Mediums in einem Abstand zum Messgerät, welcher kleiner als ein vorgebbarer Mindestabstand ist, führt bei diesen Messgeräten, wie beispielsweise induktiven Messgeräten zu einer fehlerhaften Kalibrierung und somit zu einem erhöhten Risiko für eine Fehlmessung. Ist beispielsweise bei einem induktiven Metallortungsgerät während der Kalibrierung doch ein metallischer Gegenstand in Reichweite des Ortungssensors des Messgeräts, so kann dies dazu fühlen, dass der Ortungssensor bei der Objektortung nicht funktioniert oder im schlimmsten Fall ein vorhandenes, Objekt nicht anzeigt.

Darüber hinaus ist vorgesehen, dass die Referenzmessung zur Kalibrierung des Messgeräts abgebrochen wird, wenn ein vorgebbarer Mindestabstand eines solchen Messgeräts zur Oberfläche eines Mediums während der Referenzmessung unterschritten wird. Auf diese Weise ist in dem erfindungsgemäßen Verfahren sichergestellt, dass ein erfindungsgemäßes Ortungsgerät nicht frühzeitig beispielsweise auf eine Wand aufgesetzt wird.

Erfindungsgemäß teilt das erfindungsgemäße Messgerät seinem Nutzer mit, wenn ein vorgebbarer Abstand für die Referenzmessung zur Kalibrierung des Messgeräts unter- oder überschritten wird. Dies kann beispielsweise durch eine optische Anzeige, ggf. im Display des Messgeräts oder aber auch durch einen akustischen Warnton realisiert werden.

Das erfindungsgemäße Verfahren führt zumindest eine Referenzmessung zur Kalibrierung des Messgeräts bei Vorliegen eines vorgebbaren Abstands des Messgeräts zu einer Oberfläche eines Mediums selbstständig und automatisch durch. Dies führt dazu, dass das erfindungsgemäße Ortungsgerät kurzfristig für die Lokalisierung eines in einem Medium eingeschlossenen Objektes zur Verfugung steht.

Das erfindungsgemäße Verfahren kann somit insbesondere auch sicher stellen, dass die Referenzmessung zur Kalibrierung des Messgerätes nur durchgeführt wird, wenn sich das Messgerät auf der Oberfläche eines zu vermessenden Mediums befindet. Dieser Spezialfall des verschwindenden vorgebbaren Abstandes des Messgerätes zu einem Mediums findet beispielsweise bei kapazitiven Ortungsgeräten in vorteilhafter Weise Anwendung.

Weitere Vorteile des erfindungsgemäßen Ortungsgerätes sowie des erfindungsgemäßen Verfahrens zur Kalibrierung eines Messgeräts sind in der nachfolgenden Zeichnung sowie in der zugehörigen Beschreibung offenbart.

### Zeichnung

In der Zeichnung sind Ausführungsbeispiele des erfindungsgemäßen Ortungsgeräts dargestellt, die in der nachfolgenden Beschreibung näher erläutert werden sollen. Die Figuren der Zeichnung, deren Beschreibung sowie die Ansprüche enthalten zahlreiche Merkmale in Kombination. Ein Fachmann wird diese Merkmale auch einzeln betrachten und zu weiteren, sinnvollen Kombinationen zusammenfassen, die somit als in diesem Text ebenfalls angesehen werden

Es zeigt:
- Fig.: 1 eine Ausführungsform eines erfindungsgemäßen Messgeräts in einer vereinfachten, perspektivischen Gesamtdarstellung,
- Fig. 2: eine schematische Schnittdarstellung einer alternativen Ausführungsform eines erfindungsgemäßen Messgeräts bei Wandkontakt,
- Fig. 3: die schematische Darstellung des Messgeräts gemäß Fig. 2 im Falle eines von einer Wand entfernten Messgeräts,
- Fig. 4: ein alternatives Ausführungsbeispiel eines erfindungsgemäßen Ortungsgeräts mit einer zweiten Ausführungsform einer Abstandssensorik bei auf einer Wand aufgesetztem Messgerät,
- Fig. 5: das Messgerät gemäß Fig. 4 bei Vorliegen eines Abstands zu der zu vermessenden Wand,
- Fig. 6: ein weiteres Ausführungsbeispiel eines erfindungsgemäßen Messgeräts mit einer alternativen Abstandssensorik in einer Schnittdarstellung bei einem auf eine Wand aufgesetztem Messgerät,
- Fig. 7: das Messgerät gemäß Fig. 6 mit entsprechender Abstandssensorik, bei von der Wand entferntem Messgerät.

### Beschreibung der Ausführungsbeispiele

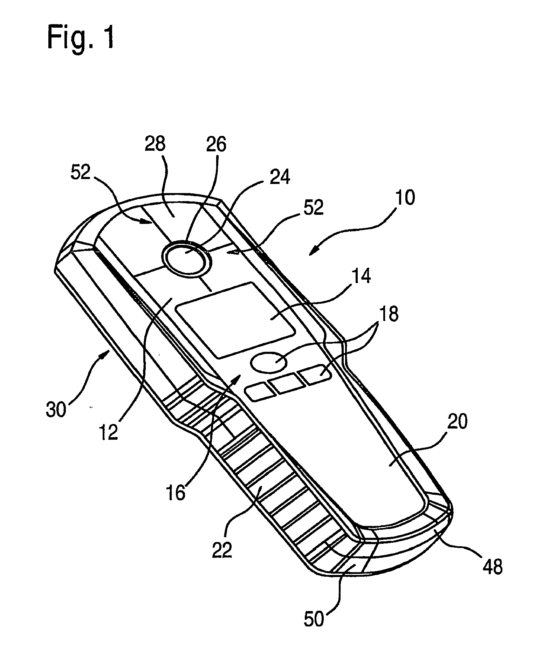

Fig. 1 zeigt ein erstes Ausführungsbeispiel eines erfindungsgemäßen Ortungsgeräts 10 in einer perspektivischen Übersichtsdarstellung. Das Ortungsgerät besitzt ein Gehäuse 12, das aus einer oberen und einer unteren Halbschale 48 bzw. 50 gebildet ist Im Inneren des Gehäuses ist zumindest ein Sensor, im Ausführungsbeispiel der Fig. 1, ein induktiver Sensor, mit einer Spulenanordnung zur Metalldetektion, eine Signalerzeugungs- und Auswerteelektronik, sowie eine Energieversorgung beispielsweise über Batterien oder Akkus, vorgesehen. Das Ortungsgerät gemäß Fig. 1 besitzt darüber hinaus eine Anzeige 14 zur Ausgabe eines mit dem Messsignal korrelierten Ausgabesignals. Über die Anzeige 14, beispielsweise eine segmentierte Balkenanzeige oder aber auch eine graphische LCD-Anzeige, ist es möglich die Stärke des detektierten Messsignals darzustellen.

Des weiteren besitzt das erfindungsgemäße Ortungsgerät ein Bedienfeld 16 mit einer Reihe von Bedienelementen 18, die es ermöglichen, das Gerät beispielsweise ein- bzw. auszuschalten, sowie gegebenenfalls einen Messvorgang zu starten.

Im Bereich unterhalb des Bedienfelds 16 weist das Ortungsgerät gemäß Fig. 1 einen Bereich 20 auf, der in seiner Form und Materialgestaltung als Handgriff 22 zur Führung des erfindungsgemäßen Ortungsgeräts ausgebildet ist. Mittels dieses Handgriffs 22 wird das Ortungsgerät mit seiner Unterseite 30 über eine Oberfläche eines zu untersuchenden Gegenstands bzw. eines Mediums geführt.

Auf der dem Handgriff 22 entgegengesetzten Seite 28 des Ortungsgeräts 10 weist das Messgerät eine das Gehäuse durchdringende Öffnung 24 auf. Die Öffnung 24 wird gebildet durch eine in das Gehäuse 12 eingesetzte Hülse 26 sowie die Ober- und Unterseite des Gehäuses des Messgeräts. Die Öffnung 24 ist konzentrisch zu einer Spule des induktiven Sensors des Messgerätes angeordnet. Auf diese Weise entspricht der Ort der Öffnung 24 im Messgerät, dem Zentrum des Ortungsdetektors, so dass dem Nutzer damit auch gleichzeitig die genaue Lage eines eventuell detektierten Gegenstandes angezeigt wird. Darüber hinaus weist das Messgerät zusätzlich auf seine Oberseite Markierungslinien 52 auf, über die das genaue Zentrum der Öffnung 24 und somit die Lage eines eingeschlossenen Gegenstandes lokalisiert werden kann.

Im Anwendungsfall wird das erfindungsgemäße Ortungsgerät gemäß Fig. 1 mit seiner Unterseite 30 entlang der Oberfläche eines zu untersuchenden Mediums geführt. Dazu können in anderen Ausführungsformen eines erfindungsgemäßen Ortungsgerätes beispielsweise auch Kugeln, Rollen oder andere Wälzkörper vorgesehen sein, mit denen das Gerät über eine Wandung dann verfahren werden kann. Über den induktiven Sensor des Ortungsgeräts können dabei in der Wand eingeschlossene, metallische Gegenstände lokalisiert und mittels der Anzeige 14 dem Nutzer zur Kenntnis gebracht werden. Das erfindungsgemäße Ortungsgerät weist in seinem Inneren eine Abstandssensorik auf, die es ermöglicht, den Kontakt des Messgeräts mit der zu untersuchenden Wand bzw. das Unterschreiten eines vorgebbaren Mindestabstands des erfindungsgemäßen Ortungsgeräts von der zu untersuchenden Wand zu detektieren. Je nach verwendeter Abstandssensorik weist das erfindungsgemäße Ortungsgerät dazu auf seiner Unterseite Austritts- und Eintrittsöffnungen für ein Messsignal der Abstandssensorik auf.

Nachfolgend werden einige mögliche Ausführungsformen einer solchen, erfindungsgemäßen Abstandssensorik aufgezeigt, die jedoch nicht als beschränkend anzusehen sind.

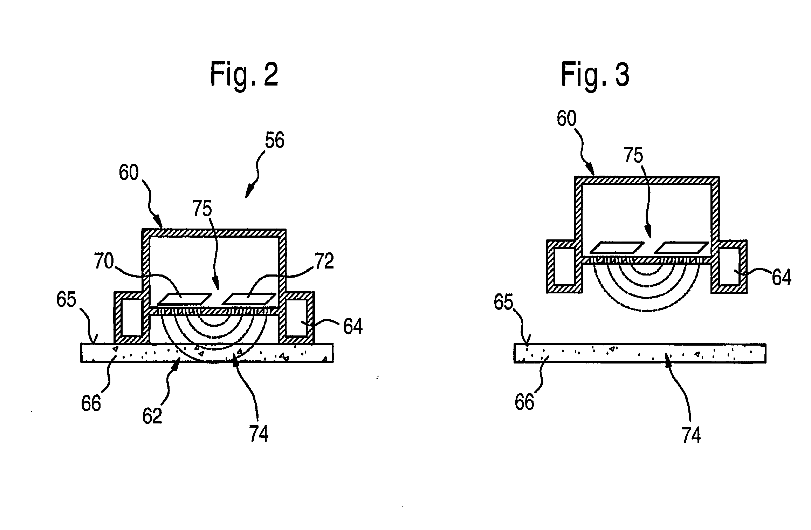

Fig. 2 zeigt ein weiteres Ausführungsbeispiel eines erfindungsgemäßen Ortungsgeräts in einer schematisierten Schnittzeichnung. Das Ortungsgerät 56 gemäß Fig. 2 weist ein Gehäuse 60 auf, in dem eine nicht näher beschriebene Sensorik zur Detektion von in einem Medium eingeschlossenen Objekten integriert ist. Diese Sensorik kann ein induktiver oder kapazitiver Sensor, ein kapazitiver Hochfrequenzsensor oder auch eine Radarsensor sein. Darüber hinaus weist das Ortungsgerät 56 eine Abstandssensorik 62 auf. Zur Ortung von in einem Medium eingeschlossenen Objekten wird das Ortungsgerät 56 mittels am Gerät bzw. Gehäuse 60 vorhandener Kugeln oder Rollen 64 über eine Oberfläche 65 eines Mediums, im Ausführungsbeispiel der Fig. 2, eine Wand 66 geführt. Ein in dem Medium eingeschlossenes Objekt würde dabei durch einen entsprechenden Sensor lokalisiert. Neben dem Detektionssensor ermöglicht es die Abstandssensorik 62 den Kontakt des Messgeräts 56 mit der Wand 66 zu detektieren bzw. einen vorgebbaren Mindestabstand des Messgeräts sicherzustellen.

Die Abstandssensorik 62 des erfindungsgemäßen Ortungsgeräts gemäß Fig. 2 weist einen kapazitiven Sensor 68 auf, der mittels einer entsprechenden Ansteuerelektronik des Gerätes ein elektrisches bzw. elektromagnetisches Feld zwischen seinen beiden Kondensatorelementen 70 bzw. 72 aufbauen kann. Die beiden Elektroden des Messkondensators 75 können dabei aus jedem leitenden Material in jeder denkbaren Anordnung bestehen. Hierbei sind insbesondere zu nennen Metall, Kabel und Spulen. Das vom Messkondensator 75 erzeugte Feld 74 des Ortungsgeräts ist dabei so dimensioniert, dass es bei auf der Wand 66 aufgesetztem Messgerät zumindest teilweise in die Wand eindringt

Befindet sich - wie in Fig. 3 dargestellt - das erfindungsgemäße Ortungsgerät 56 jedoch mit einem Mindestabstand d von der Wand 66 entfernt, so greift das elektrische Feld 74 der Abstandssensorik 62 nicht mehr oder zu einem zu vernachlässigendem Anteil in die Wand 66 ein. Aufgrund der unterschiedlichen Dielektrizität des in das Feld 74 eingebrachten Mediums ändert sich die Kapazität des Messkondensators 75 der Abstandssensorik 62. Eine solche Kapazitätsänderung ist messbar und kann in ein direktes Signal zur Bestimmung des Wandkontakts bzw. zur Bestimmung des Vorliegens eines Mindestabstands d von einer Wand genutzt werden.

Ist das erfindungsgemäße Ortungsgerät beispielsweise ein kapazitives Gerät bzw. ein Hochfrequenzdetektor so kann bei entsprechender Schaltung des Geräts der Messkondensator, der der Lokalisierung von in einem Medium eingeschlossenen Objekten dient auch als Kondensator 74 der Abstandssensorik 62 benutzt werden. In diesem Fall ist es in vorteilhafter Weise möglich, auf unterschiedliche Sensoren zur Lokalisierung der eingeschlossenen Objekte sowie zur Wandkontakt bzw. Wandnäherung zu verzichten, so dass sich ein kompaktes und leistungsfähiges Ortungsgerät realisieren lässt.

Der Mindestabstand d, der mit der Abstandssensorik 62 detektiert werden soll, kann beispielsweise im vorhinein empirisch ermittelt werden, so dass eine entsprechende Konfiguration und Anordnung der Abstandssensorik 62 sicherstellt, dass nicht nur das Vorliegen eines direkten Wandkontakts (vgl. Fig. 2), sondern auch das Unterschreiten eines Mindestabstands d (vgl. Fig. 3) sicher detektiert werden kann. Kapazitive Abstandssensoriken wie in Fig. 2 und in Fig. 3 gezeigt, lassen sich jedoch auch in induktive Messgeräte oder beispielsweise Radargeräte integrieren.

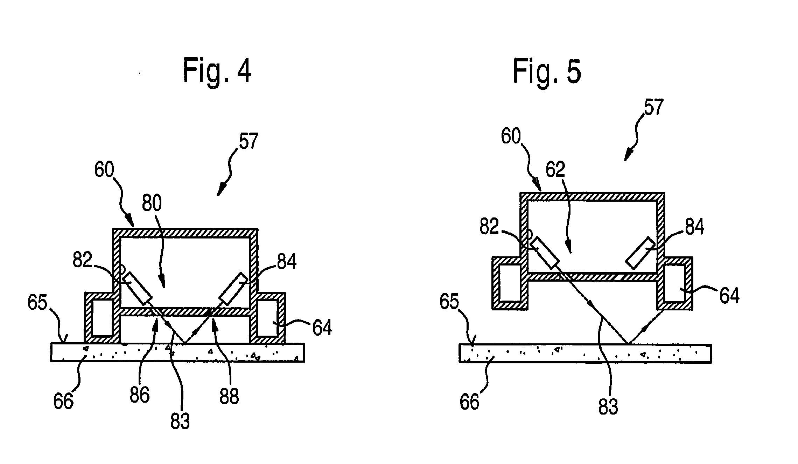

Fig. 4 bzw. Fig. 5 zeigen eine alternative Ausführungsform einer Abstandssensorik für ein erfindungsgemäßes Messgerät. Das Ortungsgerät 57 gemäß Fig. 4 bzw. Fig. 5 kann ein beliebiges Ortungsgerät zur Detektion von in einem Medium eingeschlossenen Objekten, wie beispielsweise ein induktives Gerät, ein kapazitives Gerät, ein Netzspannungsdetektor, ein Hochfrequenzdetektor oder aber auch ein Radargerät sein.

Das Ortungsgerät 57 nutzt für seine Abstandssensorik 62 einen optischen Sensor 80, der in Fig. 4 in schematischer Weise dargestellt ist Der Sensor 80 umfasst zumindest eine Lichtquelle 82, wie beispielsweise einen Laser oder eine LED sowie einen entsprechend angeordneten lichtempfindlichen Empfänger 84, wie beispielsweise eine Fotodiode oder ein CCD-Element. Das von der Lichtquelle 82 ausgesendete Licht 83 wird durch eine Öffnung 86 im Gehäuseboden 30 des Messgeräts 57 ausgesandt und im Falle eines Wandkontakts des Ortungsgeräts 57 von der Oberfläche 65 dieser Wand 66 reflektiert. Das von der Wand 66 reflektierte Licht tritt durch eine entsprechende Öffnung 88 im Boden 30 des Messgeräts 57 wieder in das Messgerät ein und fällt dort auf den lichtempfindlichen Empfänger 84.

Der lichtempfindliche Empfänger 84 detektiert in definiertem Winkel die Strahlungsintensität des von der Wand 66 reflektierten Lichts. Dabei ist im Ausfihrungsbeispiel der Figuren 4 und 5 der Winkel so eingestellt, dass nur bei Wandkontakt Licht in den Empfänger 84 reflektiert wird. Ist das erfindungsgemäße Ortungsgerät 57, wie in Fig. 5 dargestellt, von der Oberfläche 65 der Wand 66 entfernt und beabstandet, so wird das von der Wand 66 reflektierte Licht des optischen Sensors 80 nicht auf den Empfänger 84 zurückreflektiert Auf diese Weise lässt sich durch Auswertung des Empfängers 84, beispielsweise durch die geräteinterne Ansteuer- und Auswerteeinheit des erfindungsgemäßen Ortungsgeräts 57 der Wandkontakt dieses Geräts zuverlässig detektieren.

So kann beispielsweise im Falle des Wandkontakts, wie er in Fig. 4 dargestellt ist, ein entsprechendes optisches oder akustisches Signal an den Nutzer des Ortungsgeräts weitergegeben werden. Dieses Signal kann den Nutzer bestimmter Messgerättypen somit darauf aufmerksam machen, dass in diesem Falle eine Referenzmessung zur Kalibrierung dieses Messgeräts nicht angezeigt ist, da die vorhandene Wand 66 die Messergebnisse der Referenz bzw. Nullmessung verfälschen würde. Im Falle von kapazitiven Messgeräten, die eine Kalibrierung auf der Wand, d.h. bei einem verschwindenden Abstand (d=0) erfordern, kann dem Anwender durch die Signalisierung des Wandkontaktes mitgeteilt werden, dass er nunmehr gerade eine Kalibrationsmessung vornehmen kann.

Anstelle des optischen Signals ist es in alternativen Ausführungsformen auch möglich, beispielsweise ein Ultraschall-Signal für diese Art der Abstandssensorik zu verwenden.

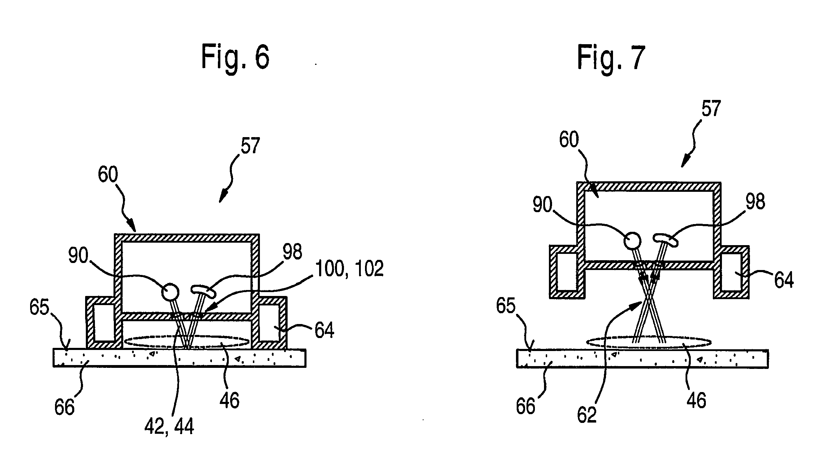

Fig. 6 und Fig. 7 zeigen eine alternative Ausführungsform eines optischen Sensors 81 für eine Abstandssensorik 62 eines erfindungsgemäßen Ortungsgeräts. Das Ortungsgerät 58, welches eines oder mehrere der bekannten Detektionsverfahren zur Lokalisierung eines in einem Medium eingeschlossenen Objektes nutzen kann, weist eine Abstandssensorik 62 mit fokussierter Optik auf. Dabei wird eine Lichtquelle 90, wie beispielsweise ein Laser, eine Laserdiode oder aber auch eine LED durch eine geeignete Optik 92, die im Beispiel der Fig. 6 bzw. 7 durch eine schematisierte Linse 94 dargestellt ist, zu einem scharfen Leuchtpunkt bzw. einem Leuchtstrich oder jeder anderen entsprechenden geometrischen Form 96 auf die Oberfläche 65 einer Wand 66 geworfen.

Dieser Leuchtfleck 96 wird mit zunehmendem Abstand des Ortungsgeräts 58 von der Wand 66 immer unschärfer, da die entsprechenden Abbüdungserfordemisse der Optik 92 nicht mehr erfüllt sind. Diese auf der Wand 66 abgebildete Unschärfe wird von einem entsprechenden lichtempfindlichen Detektor in geeigneter Form ausgewertet. So kann beispielsweise je nach verwendetem Detektor die Form des Lichtsignals, d. h. die Form des Leuchtflecks 96, dessen absolute Helligkeit, bzw. die Helligkeitsverteilung über der Fläche ausgewertet werden. Mit Hilfe einer Empfangsoptik 100, die im Ausführungsbeispiel der Figuren 6 bzw. 7 ebenfalls vereinfacht als Linse 102 dargestellt ist, wird das Detektionssignal 104 auf den Empfangsdetektor 98 der Abstandssensorik 62 des Ortungsgeräts 58 geleitet

So kann z. B. über eine in der Auswerte- und Steuereinheit des erfindungsgemäßen Ortungsgeräts hinterlegte Kennlinie für die Lichtintensität auf dem Empfangsdetektor die Annäherung des Ortungsgeräts an ein Medium, wie dies beispielsweise durch die Wand 66 in den Ausführungsbeispielen symbolisiert ist, auch quantitativ erfasst werden. Unterschreitet das erfindungsgemäße Ortungsgerät einen Mindestabstand d von einem Medium, wie beispielsweise der Wand 66, so kann beispielsweise durch die geräteinterne Steuereinheit das geräteinterne Kalibrierungsverfahren gesperrt werden und der Gerätenutzer durch ein Signal, beispielsweise ein optisches oder akustisches Hinweissignal, darauf aufmerksam gemacht werden, dass unter den momentan vorliegenden Betriebsbedingungen eine Referenzmessung zur Kalibrierung des Messgeräts nicht durchgeführt werden kann, da diese aufgrund des vorhandenen Mediums (Wand 66) zu einer Fehlmessung führen würde.

Andererseits kann auf diese weise auch eindeutig detektiert werden, ob dass Messgerät auf einer Wand aufgesetzt ist, so dass beispielsweise für kapazitive Geräte, eine Kalibrationsmessung vorgenommen werden kann.

Somit ermöglicht das erfindungsgemäße Ortungsgerät ein Verfahren zur Kalibrierung eines Messgeräts, bei dem eine Referenzmessung für die Kalibrierung des Geräts erst nach der Durchführung mindestens einer Messung zur Detektion eines Abstands d des Messgeräts zu einer Oberfläche eines Mediums durchgeführt wird. Auf diese Weise kann beispielsweise sichergestellt werden, dass die Referenzmessung zur Kalibrierung des Messgeräts nicht durchgeführt wird, bzw. abgebrochen wird, wenn ein vorgebbarer Mindestabstand des Messgeräts zur Oberfläche eines Mediums unterschritten ist bzw. während der Referenzmessung unterschritten wird. Andererseits kann auch sichergestellt werden, dass ein Kontakt des Messgerätes mit der Oberfläche eines Mediums besteht, so dass beispielsweise eine Referenzmessung für kapazitive Messgeräte durchgeführt werden kann.

In vorteilhafter Weise kann die Abstandssensorik 62 der erfindungsgemäßen Messgeräte derart automatisiert sein, dass zuerst automatisch geprüft wird, ob ein vorgebbarer Abstand d zu einem Medium eingehalten ist, d.h. ob beispielsweise der momentane Abstand D des Ortungsgerätes zu einem Medium größer ist, als der vorgebbare Mindestabstand d, daraufhin dann eine Referenzmessung zur Kalibrierung des Messgeräts durchgeführt wird und anschließend die erfolgreiche Kalibrierung des Messgeräts beispielsweise in einem optischen Display des Messgeräts angezeigt wird. Ein Nutzer des erfindungsgemäßen Ortungsgeräts kann somit direkt mit der Messung zur Detektion von in einem Medium eingeschlossenen Objekten beginnen, ohne erst eine manuelle Kalibrierung durchführen zu müssen.

Neben dem beschriebenen automatischen Kalibrierungsverfahren, kann in den erfindungsgemäßen Messgeräten selbstverständlicher Weise auch vorgesehen sein, einen solchen Kalibrierungsmodus nutzergesteuert, beispielsweise durch eine Taste eines Bedienfelds zu aktivieren.

Das erfindungsgemäße Ortungsgerät und insbesondere die Abstandssensorik eines solchen Ortungsgeräts ist nicht auf die in den Ausführungsbeispielen aufgezeigten Formen beschränkt. Insbesondere ist die Abstandssensorik nicht beschränkt auf ein kapazitives oder optisches Verfahren. Ultraschall-Verfahren oder Radarverfahren können ebenfalls zur Anwendung kommen. Es können beispielsweise aber auch mechanische Verfahren, d.h. alle Arten von mechanischen Kontaktdetektionen, beispielsweise durch Schalter zur Abstandssensorik des erfindungsgemäßen Ortungsgeräts genutzt werden. So kann beispielsweise durch das Aufsetzen des Geräts auf eine Wand ein entsprechender Schalter automatisch betätigt werden und der Schaltvorgang und der damit einhergehende Wandkontakt an die Steuer- und Auswerteeinheit des Messgeräts übermittelt werden.

Die Signale der Abstandssensorik werden egal von welchen Wandabstandssensoren sie im Einzelfall geliefert werden, auf elektronischem oder softwaretechnischem Weg vom Ortungsgerät ausgewertet. So kann beispielsweise die Ansteuereinheit des Detektionssensors zur Lokalisierung von in einem Medium eingeschlossenen Objekten aufgrund der Signale der Abstandssensorik darüber entscheiden, ob unter bestimmten Messbedingungen kalibriert werden darf oder nicht. So kann beispielsweise auch eine Messautomatik im erfindungsgemäßen Ortungsgerät integriert sein, die das Gerät bei nicht vorhandenem Wandkontakt, bzw. einem Abstand, der größer ist als ein Mindestabstand, automatisch kalibriert werden. Dem Nutzer steht unter diesen Bedingungen jederzeit ein betriebsbereites, d. h. kalibriertes Messsystem zur Verfugung.

Das erfindungsgemäße Ortungsgerät ist nicht beschränkt auf die Verwendung eines induktiven oder kapazitiven Sensors zur Detektion von in einem Medium eingeschlossenen Objekten. Vielmehr kann ein jedes bekannte und unbekannte Ortungsgerät mit einer erfindungsgemäßen Abstandssensorik versehen sein.

Das erfindungsgemäße Ortungsgerät und das zugrunde liegende Verfahren sind nicht beschränkt auf die Anwendung bei Wänden, Decken und Böden. Diese sind lediglich als eine nicht begrenzende Auswahl zur Verdeutlichung der Funktionsweise anzusehen.

## Patentansprüche

1. Ortungsgerät, insbesondere ein handgehaltenes Ortungsgerät, zur Detektion von in einem Medium eingeschlossenen Objekten, mit ersten Mitteln zur Detektion von in einem Medium eingeschlossenen Objekten, sowie mit einer Steuer- und Auswerteeinheit für Messsignale des Ortungsgerätes, wobei das Ortungsgerät (56, 57, 58) über zweite Detektionsmittel (62,68,80,81) verfügt, die es ermöglichen den Abstand d des Ortungsgerätes (56,57,58) zu der Oberfläche (65) des Mediums (66) zu detektieren **gekennzeichnet durch** Mittel, die dazu eingerichtet sind, dem Nutzer mitzuteilen, wenn ein vorgebbarer Abstand des Ortungsgerätes zu der Oberfläche des Mediums (66) für eine Referenzmessung zur Kalibrierung des Ortungsgerätes unterschritten oder überschritten wird, oder **durch** Mittel zur Selbsttätigen und automatischen Durchführung einer Referenzmessung zur Kalibrierung des Ortungsgerätes bei Vorliegen eines vorgebbaren Abstands des Ortungsgerätes zu der Oberfläche des Mediums (66).

2. Ortungsgerät nach Anspruch 1, **dadurch gekennzeichnet, dass** die zweiten Mittel (62) einen kapazitiven Sensor (68) aufweisen.

3. Ortungsgerät nach Anspruch 2, **dadurch gekennzeichnet, dass** die zweiten Mittel (62) und die ersten Mittel durch ein und den gleichen kapazitiven Sensor (68) gebildet sind.

4. Ortungsgerät nach Anspruch 1, **dadurch gekennzeichnet, dass** die zweiten Mittel (62) einen optischen Sensor (80,81) aufweisen.

5. Ortungsgerät nach Anspruch 4, **dadurch gekennzeichnet, dass** der optische Sensor (80,81) zumindest eine Lichtquelle (82,90) und einen lichtempfindlichen Empfänger (84,98) umfasst.

6. Ortungsgerät nach Anspruch 1, **dadurch gekennzeichnet, dass** die zweiten Mittel (62) einen mechanischen Sensor aufweisen.

7. Verfahren zur Kalibrierung eines Ortungsgerätes zur Detektion von in einem Medium eingeschlossenen Objekten, wobei eine Referenzmessung zur Kalibrierung des Messgerätes (56,57,58) erst nach der Durchführung mindestens einer Messung des Abstandes d des Messgerätes (56,57,58) zu der Oberfläche (65) des Mediums (66) durchgefürt wird **dadurch gekennzeichnet, dass** dem Nutzer mitgeteilt wird, wenn ein vorgebbarer Abstand des Ortungsgerätes zu der Oberfläche des Mediums (66) für eine Referenzmessung zur Kalibrierung des Ortungsgerätes unterschritten oder überschritten wird, oder dass eine Referenzmessung zur Kalibrierung des Ortungsgerätes bei Vorliegen eines vorgebbaren Abstands des Ortungsgerätes zu der Oberfläche des Mediums (66) Selbsttätig und automatisch durchgeführt wird.

8. Verfahren nach Anspruch 7, **dadurch gekennzeichnet, dass** die Referenzmessung zur Kalibrierung des Messgerätes nicht durchgeführt wird, wenn ein vorgebbarer Mindestabstand d des Messgerätes (56,57,58) zur Oberfläche (65) des Mediums (66) unterschritten ist.

9. Verfahren nach Anspruch 7 oder 8, **dadurch gekennzeichnet, dass** die Referenzmessung zur Kalibrierung des Messgerätes abgebrochen wird, wenn ein vorgebbarer Mindestabstand d des Messgerätes (56,57,58) zur Oberfläche (65) des Mediums (66) während der Referenzmessung unterschritten wird.

10. Verfahren nach einem der vorhergehenden Ansprüche 7 bis 9, **dadurch gekennzeichnet, dass** die Unterschreitung eines Mindestabstandes d für die Referenzmessung dem Nutzer durch das Gerät (56,57,58) übermittelt wird.

11. Verfahren nach Anspruch 7, **dadurch gekennzeichnet, dass** zumindest eine Referenzmessung zur Kalibrierung des Messgerätes (56,57,58) bei Vorliegen eines vorgebbaren Abstandes D des Messgerätes (56,57,58) zu der Oberfläche (65) eines Mediums (66), der größer ist als ein vorgebbarer Mindestabstand d automatisch durchgeführt wird.

12. Verfahren nach Anspruch 7, **dadurch gekennzeichnet, dass** die Referenzmessung zur Kalibrierung des Messgerätes nur durchgeführt wird, wenn sich das Messgerät (56,57,58) auf der Oberfläche (65) des Mediums (66) befindet.

13. Verfahren nach Anspruch 12, **dadurch gekennzeichnet, dass** die Referenzmessung zur Kalibrierung des Messgerätes abgebrochen wird, wenn der Wandkontakt des Messgerätes (56,57,58) zur Oberfläche (65) des Mediums (66) nicht mehr sicher gestellt ist.

## Claims

1. Locating device, in particular a handheld locating device, for detecting objects enclosed in a medium, having first means for detecting objects enclosed in a medium and having a control and evaluation unit for measurement signals from the locating device, the locating device (56, 57, 58) having second detection means (62, 68, 80, 81) which make it possible to detect the distance d between the locating device (56, 57, 58) and the surface (65) of the medium (66), **characterized by** means which are set up to inform the user if a predefinable distance between the locating device and the surface of the medium (66) for a reference measurement for calibrating the locating device is undershot or exceeded, or by means for independently and automatically carrying out a reference measurement for calibrating the locating device when there is a predefinable distance between the locating device and the surface of the medium (66).

2. Locating device according to Claim 1, **characterized in that** the second means (62) have a capacitive sensor (68).

3. Locating device according to Claim 2, **characterized in that** the second means (62) and the first means are formed by the same capacitive sensor (68).

4. Locating device according to Claim 1, **characterized in that** the second means (62) have an optical sensor (80, 81).

5. Locating device according to Claim 4, **characterized in that** the optical sensor (80, 81) comprises at least one light source (82, 90) and a light-sensitive receiver (84, 98).

6. Locating device according to Claim 1, **characterized in that** the second means (62) have a mechanical sensor.

7. Method for calibrating a locating device for detecting objects enclosed in a medium, a reference measurement for calibrating the measuring device (56, 57, 58) only being carried out after at least one measurement of the distance d between the measuring device (56, 57, 58) and the surface (65) of the medium (66) has been carried out, **characterized in that** the user is informed if a predefinable distance between the locating device and the surface of the medium (66) for a reference measurement for calibrating the locating device is undershot or exceeded, or **in that** a reference measurement for calibrating the locating device is independently and automatically carried out when there is a predefinable distance between the locating device and the surface of the medium (66).

8. Method according to Claim 7, **characterized in that** the reference measurement for calibrating the measuring device is not carried out if a predefinable minimum distance d between the measuring device (56, 57, 58) and the surface (65) of the medium (66) is undershot.

9. Method according to Claim 7 or 8, **characterized in that** the reference measurement for calibrating the measuring device is terminated if a predefinable minimum distance d between the measuring device (56, 57, 58) and the surface (65) of the medium (66) is undershot during the reference measurement.

10. Method according to one of the preceding Claims 7 to 9, **characterized in that** the undershooting of a minimum distance d for the reference measurement is transmitted to the user by the device (56, 57, 58).

11. Method according to Claim 7, **characterized in that** at least one reference measurement for calibrating the measuring device (56, 57, 58) is automatically carried out when there is a predefinable distance D between the measuring device (56, 57, 58) and the surface (65) of a medium (66) which is greater than a predefinable minimum distance d.

12. Method according to Claim 7, **characterized in that** the reference measurement for calibrating the measuring device is carried out only if the measuring device (56, 57, 58) is on the surface (65) of the medium (66).

13. Method according to Claim 12, **characterized in that** the reference measurement for calibrating the measuring device is terminated if the wall contact between the measuring device (56, 57, 58) and the surface (65) of the medium (66) is no longer ensured.

## Revendications

1. Appareil de suivi, en particulier appareil de suivi porté à la main, destiné à détecter des objets immergés dans un fluide, et présentant
des premiers moyens de détection d'objets immergés dans un fluide ainsi qu'une unité de commande et d'évaluation des signaux de mesure de l'appareil de suivi,
l'appareil de suivi (56, 57, 58) disposant de deuxièmes de moyens de détection (62, 68, 80, 81) qui permettent de détecter la distance d entre l'appareil de détection (56, 57, 58) et la surface (65) du fluide (66),
**caractérisé par**
des moyens conçus pour faire savoir à l'utilisateur si une distance prédéterminée de l'appareil de suivi par rapport à la surface du fluide (66) en vue d'une mesure de référence pour l'étalonnage de l'appareil de suivi n'est pas atteinte ou est dépassée ou
par des moyens d'exécution autonome et automatique d'une mesure de référence pour l'étalonnage de l'appareil de suivi si l'appareil de suivi se trouve à une distance prédéterminable de la surface du fluide (66).

2. Appareil de suivi selon la revendication 1, **caractérisé en ce que** les deuxièmes moyens (62) présentent un détecteur capacitif (68).

3. Appareil de suivi selon la revendication 2, **caractérisé en ce que** les deuxièmes moyens (62) et les premiers moyens sont formés par un seul et même détecteur capacitif (68).

4. Appareil de suivi selon la revendication 1, **caractérisé en ce que** les deuxièmes moyens (62) présentent un détecteur optique (80, 81).

5. Appareil de suivi selon la revendication 4, **caractérisé en ce que** le détecteur optique (80, 81) comprend au moins une source de lumière (82, 90) et un récepteur (84, 98) sensible à la lumière.

6. Appareil de suivi selon la revendication 1, **caractérisé en ce que** les deuxièmes moyens (62) présentent un détecteur mécanique.

7. Procédé d'étalonnage d'un appareil de suivi destiné à détecter des objets immergés dans un fluide, une mesure de référence en vue de l'étalonnage de l'appareil de mesure (56, 57, 58) n'étant exécutée qu'après qu'au moins une mesure de la distance d de l'appareil de mesure (56, 57, 58) et la surface (65) du fluide (66) a été exécutée,
**caractérisé en ce que**
l'utilisateur est averti si une distance prédéterminée de l'appareil de suivi par rapport à la surface du fluide (66) en vue d'une mesure de référence pour l'étalonnage de l'appareil de suivi n'est pas atteinte ou est dépassée ou
**en ce qu'**une mesure de référence pour l'étalonnage de l'appareil de suivi des moyens d'exécution est effectuée de manière autonome et automatique si l'appareil de suivi se trouve à une distance prédéterminable de la surface du fluide (66).

8. Procédé selon la revendication 7, **caractérisé en ce que** la mesure de référence en vue de l'étalonnage de l'appareil de mesure n'est pas effectuée si une distance minimale prédéterminable d entre l'appareil de mesure (56, 57, 58) et la surface (65) du fluide (66) n'est pas atteinte.

9. Procédé selon les revendications 7 ou 8, **caractérisé en ce que** la mesure de référence en vue de l'étalonnage de l'appareil de mesure est interrompue si une distance minimale prédéterminable d entre l'appareil de mesure (56, 57, 58) et la surface (65) du fluide (66) n'est pas atteinte.

10. Procédé selon l'une des revendications 7 à 9 qui précèdent, **caractérisé en ce que** l'appareil (56, 57, 58) indique à l'utilisateur qu'une distance minimale d pour la mesure de référence n'est pas atteinte.

11. Procédé selon la revendication 7, **caractérisé en ce qu'**au moins une mesure de référence en vue de l'étalonnage de l'appareil de mesure (56, 57, 58) est exécutée automatiquement si une distance prédéterminable D entre l'appareil de mesure (56, 57, 58) et la surface (65) d'un fluide (66) est plus grande qu'une distance minimale d prédéterminable.

12. Procédé selon la revendication 7, **caractérisé en ce que** la mesure de référence en vue de l'étalonnage de l'appareil de mesure est exécutée que si l'appareil de mesure (56, 57, 58) se trouve sur la surface (65) du fluide (66).

13. Procédé selon la revendication 12, **caractérisé en ce que** la mesure de référence en vue de l'étalonnage de l'appareil de mesure est interrompue si le contact entre la paroi de l'appareil de mesure (56, 57, 58) et la surface (65) du fluide (66) n'est plus constatée.
